# EUROPEAN PATENT APPLICATION

(11) **EP 2 128 025 A2**
(43) Date of publication of application: **02.12.2009**
(21) Application number: 09380110.8
(22) Date of filing: 26.05.2009
(51) Int. Cl.: B64F 1/305

(54) **Anti-collision system between aircraft boarding bridges**

(30) Priority: 28.05.2008 ES 200801597
(71) Applicant: Thyssenkrupp Elevator Innovation Center, S.A., 33203 Gijón Asturias (ES)
(72) Inventor: Fernandez Diaz, Julian, 33012 Oviedo (ES); Flores Castro, Alberto, 33690 Lugo de Llanera (ES)
(74) Representative: Carvajal y Urquijo, Isabel

(57) **Abstract**

Anti-collision system between aircraft passenger boarding bridges, comprising: a) defining for each set of passenger boarding bridge a fixed axis coordinate system which originates at the centre (30, 30', 30") of the entrance rotunda, and a mobile axis coordinate system which originates at the centre (25, 25' y 25") of the cab joint area; b) defining for each set of passenger boarding bridge and at all times a series of references by its coordinates with respect to the first or second axis coordinate system, based on which, distances between references of each set of passenger boarding bridge and adjacent passenger boarding bridges can be calculated.

## Description

### FIELD OF THE INVENTION

The present invention refers to an anti-collision system between aircraft boarding bridges; usually used in airports for passengers' boarding and disembarking from the plane.

The system of the invention is especially suitable when different passenger boarding bridges should be simultaneously used at different gates of the plane, and when there is great proximity between the boarding bridges.

### BACKGROUND OF THE INVENTION

The need to connect the airport terminal and the aircrafts first appeared during the first half of the 20^{th} century, along with the first commercial airlines. As time went by, the design of the passenger boarding bridges has undergone some changes, and technological improvements have been made, in response to new customers' expectations, and these technological improvements have been applied and extended to new designs.

Boarding bridges, as they are known today, are formed by a rotating structure which shall receive the name of entrance rotunda, connected to the airport terminal façade through a fixed tunnel or neck through which board and disembark of passengers takes place; a support structure for the entrance rotunda called "column"; a "tunnel" consisting of a telescopic structure which enables to modify the length of the passenger boarding bridges according to the distance between the terminal and the boarding gate of the plane; an "elevation system" also consisting of a telescopic structure on which the tunnel rests and which enables to modify the height of the passenger boarding bridge, and adapt itself to the level of the gate of the plane; a "rolling system" on which the elevation system rests and allows for the movement of the passenger boarding bridge on the airport platform; a rotating structure called "cab", used as a link between the passenger boarding bridge and the plane; a circular structure on which the cab rotates, which we will call cab joint area, and "stairs" usually located at the end of the passenger boarding bridge closest to the plane and which enables access to the passenger boarding bridge from the airport platform.

Nowadays, there exists a clear tendency in the market toward the construction of large-size aircrafts, with larger passenger capacity, and whose access gates are located at higher level. There are planes which have passenger seats at different levels, with several access gates and at different heights, which forces the passenger boarding bridges to provide simultaneous service to several gates. Additionally, the use of passenger boarding bridges to take the passengers between the airport terminal and the plane is becoming more generalized, and there are more and more passenger boarding bridges in airports, which sometimes do not have much room to place the passenger boarding bridges and, therefore, it becomes necessary to accurately control them to prevent a possible collision between them. Moreover, the view the operator has of the passenger boarding bridges is limited and depends, in many occasions, on cameras which do not show all the angles of the boarding bridge, thus, collisions between them are likely to occur.

The anti-collision systems used so far are based mainly on the following technologies:
1. - Installation of different detection devices on the sides of the boarding bridges, such as ultrasound, infrared or laser sensors, radars, etc., which send out a signal to the control system of the passenger boarding bridge when an object is detected by the aforementioned device. This technology implies the installation of a large number of sensors in order to cover all the surface of the machine, which increases the possibility of failure in some of the sensors. In the case of installation of laser radars, the cost of such devices is high. Besides, the operation of these devices can be altered according to weather conditions.
2. - Control of the position of the passenger boarding bridges by calculating the angle of the entrance rotunda. In this system, a device is installed in each of the passenger boarding bridges in order to control the angle of the boarding bridge. Each of the passenger boarding bridges knows its position, as well as that of adjacent boarding bridges, therefore, an angle is defined, below which the stop signal will be activated. The drawback of this system is that, for the same stop angle defined in the software, the distance between passenger boarding bridges varies greatly depending on their position, which can be retracted or extended, for this reason, an adequate adjustment to prevent the collision of the passenger boarding bridges in their retracted position can cause that the distance between them, when the passenger boarding bridges are extended, be so long that it prevents the service to the gates of the plane.
3. - Control of the position of the passenger boarding bridge by calculating the angle of the entrance rotunda and the extension of the boarding bridges. In this case, in order to avoid the existing problems in the case previously described, the angle defined as passenger boarding bridges stop varies according to their extension. In this way, the distance between passenger boarding bridges can be adjusted in all positions, although the position of the cab is not controlled, therefore, these can collide with one another or with the tunnels of the adjacent boarding bridges.
4. - Control of an area into which the passenger boarding bridges do not fit. A detection system is installed between the boarding bridge columns, and covers a surface between the columns and the plane, in such a way that, if any of the passenger boarding bridges moves into this area, a signal is activated in the boarding bridges invading that area. Thanks to this system, the operation range of the passenger boarding bridges is limited and it becomes necessary that the planes stop at the exact positions.

### DESCRIPTION OF THE INVENTION

The present invention aims at eliminating the previously stated problems, by means of a system which simply and precisely avoids a possible collision between boarding bridges, which may cause serious damage to the safety of people and of the boarding bridges.

Access passenger boarding bridges generally comprise an entrance rotunda held by a column, a telescopic tunnel, a cab joint area in which the telescopic tunnel ends, and by a cab which rotates around the cab joint area. The passenger boarding bridge also includes an elevation system which stands on a rolling system.

According to the embodiment of this invention, a fixed axis coordinate system is designed for each set of passenger boarding bridge, which originates at the centre of the entrance rotunda and x-axis coinciding with the axis of the fixed tunnel or entrance rotunda neck, and a mobile axis coordinate system with respect to the fixed coordinate system, which originates at the centre of the circle and x-axis aligned with the axis of the telescopic tunnel, and whose position is determined by the coordinates of its origin with respect to the fixed axis coordinate system.

Besides, for each set of passenger boarding bridge and at all times, a series of references is defined, by the coordinates with respect to the fixed or mobile axis coordinate system.

By means of a control software, distances between references of each set of passenger boarding bridge, and of the adjacent passenger boarding bridges are calculated from the position of the aforementioned references. Next, the values of the calculated distances are compared to one another and the lowest value is chosen. This lowest value is compared to a reference value to activate, by means of the control software, a slow moving speed or a stop for the passenger boarding bridge, if the lowest value is lower than the reference value.

The references defined for each passenger boarding bridge can consist of the axes of the boarding bridges, reference points of the boarding bridges, or reference points and axes thereof.

According to a preferred embodiment of the invention, the references defined for each set of passenger boarding bridge can consist of a series of external points of the cab joint area and the cab, whose position is determined by their coordinates with respect to the mobile axis coordinate system. These reference points can also include the origin of the mobile axis coordinate system of each set of passenger boarding bridge, the position of which is determined at all times by its coordinates with respect to the mobile axis coordinate system of the adjacent boarding bridges.

The references defined for each set of passenger boarding bridge can also include the position of the axis of each set of passenger boarding bridge, in relation to the angle formed between said axis and the X axis of the first fixed axis coordinate system of said boarding bridge.

The references defined for each set of passenger boarding bridges can also include the angle formed by the axis of each set of passenger boarding bridge and the axis of the adjacent passenger boarding bridges.

Taking into account what has been previously stated, by means of the control software, and starting from the position of reference points and axes at all times, the distance between reference points of each set of passenger boarding bridge and of adjacent passenger boarding bridges, and between reference points of each set of passenger boarding bridge and axes of adjacent passenger boarding bridges is calculated. The calculated distances are inserted in a function block and as a result we obtain the minimum value of all distances between reference points and between reference points and axes of each set of passenger boarding bridge and adjacent passenger boarding bridges. These distances are inserted in a second block and as a result we obtain the minimum distance at every moment between passenger boarding bridges, which is compared to the reference values for the activation of a slow speed movement of the passenger boarding bridge or its stop. The reference values can be configured by the user.

In the aforementioned reference points, both in the cab joint area and in the cab of each passenger boarding bridge, length and angle sensors are installed, which are connected to remote modules or PLC installed in each passenger boarding bridge.

The anti-collision system is controlled by means of the corresponding software, with a central PLC which previously checks the status of the sensors installed in the passenger boarding bridges and which intervene in the calculations necessary to define the reference points. Also, the central PLC checks communication with remote modules or individual PLC installed in the boarding bridges.

The main elements to be checked by the central PLC are:
- Communication of the central PLC with remote modules installed in the boarding bridges must be accurate.
- Measure devices connected to the remote modules of each one of the passenger boarding bridges must work correctly. These devices are: a) devices to measure length; b) devices to measure the angle of the cab; and c) devices to measure the angle of the cab joint area.
- Passenger boarding bridges have to be properly calibrated.

The central PLC system belonging to the anti-collision system is linked to the individual PLC of the passenger boarding bridges in order to inform of possible failures in the devices which take part in the calculation of the anti-collision points.

Through this link, all the variables needed to calibrate the system and to check the inlets and outlets connected to the remote modules are also transferred.

Once the position of all the points has been determined, as well as the axes of the boarding bridges, the control software calculates the distances between reference points of each passenger boarding bridge, and of adjacent passenger boarding bridges and next, between each of the reference points of each boarding bridge with the axes of the adjacent passenger boarding bridges in order to continue with the process as it has already been described.

The control device may consist of an independent programmable logic controller. The control software of the anti-collision system runs in the programmable logic controller of the boarding bridge itself.

### BRIEF DESCRIPTION OF THE DRAWINGS

In the attached drawings, there is a non-limiting example of an embodiment of the system of the invention, the description of which will help understand better the characteristics and advantages thereof.

Figure 1 is a perspective view of a set of boarding bridges for boarding and disembarking from plane, having a traditional constitution.

Figure 2 is a plan view of the cab, circle and area of connection with the tunnel, on which the reference points defined in each set of passenger boarding bridges are indicated.

Figure 3 represents a plan view showing the mobile coordinate system used.

Figure 4 represents a plan view showing the fixed coordinate system used of each passenger boarding bridge.

Figure 5 represents a plan view showing the fixed coordinate system of three passenger boarding bridges and the parameters to be inserted in order to designate all the reference points to the reference system of a set of boarding bridges with the adjacent boarding bridges.

Figure 6 represents an example of the calculation of critical points of a set of boarding bridges with respect to those of the adjacent passenger boarding bridges.

Figure 7 represents an example of the calculation of the distance between each one of the points of the central passenger boarding bridges with the axes of the adjacent passenger boarding bridges.

### DETAILED DESCRIPTION OF AN EMBODIMENT -.

The invention is described based on the example represented in the drawings, which correspond to a stand of conventional passenger boarding bridges used for passenger boarding and disembarking from planes, only three passenger boarding bridges being represented for the sake of simplicity and clarity. The anti-collision system of the invention is controlled by the corresponding software, with a central PLC and an individual PLC or remote module installed in each set of passenger boarding bridges. The system includes the arrangement of sensors in the boarding bridges, whose situation and function shall be stated further in the text.

The activation of the anti-collision system object of the invention starts with the prior checking, by means of the central PLC, of the status of all the sensors installed in the passenger boarding bridges and which take part in the calculations necessary to define critical points, as it is stated further in the text. Also, the central PLC checks communication between the central PLC and remote modules or individual PLC installed in the boarding bridges.

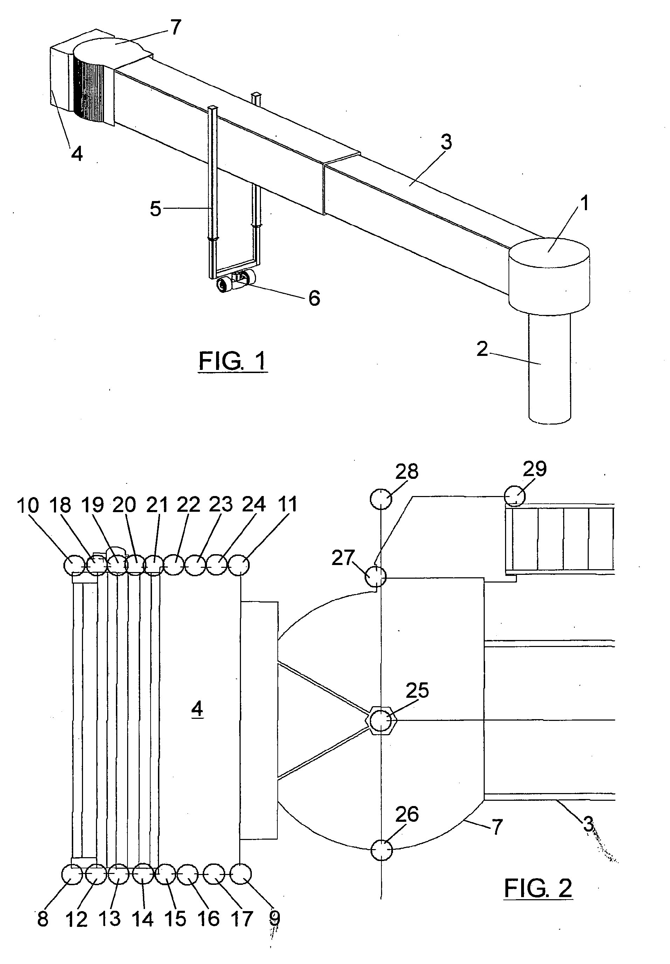

Figure 1 shows a perspective view of traditional passenger boarding bridges, formed by cab joint area 1, the column holding it 2, the telescopic tunnel 3, the cab 4 which rotates around exit rotunda 7 located at the end of tunnel 3 and elevation system 5, which stands on the rolling system 6. The whole structure may rotate around the vertical axis of support column 2.
Figure 2 represents the reference points defined in each one of the boarding bridges. The reference points defined on the sides of cab 4 are not shown in the rest of the figures in this document in order to make them simpler and easier to read, although they are considered in all calculations.

As seen in Figure 2, the defined reference points are the following:
8- Defined on the left side of the cab, in its most forward position.
9- Defined on the left side of the cab, in its most backward position.
10- Defined on the right side of the cab, in its most forward position.
11- Defined on the right side of the cab, in its most backward position.
12 to 17- Defined on the left side of the cab, evenly distributed between 8 and 9.
18 to 24- Defined on the right side of the cab, evenly distributed between 10 and 11.
25- Defined at the centre of the cab joint area.
26- Defined with the same coordinate X of point 25, and on the left side of the cab joint area.
27- Defined with the same coordinate X of point 25, and on the right side of the cab joint area.
28- Defined with the same coordinate X of point 25, and on the right side of the service stairs.
29- This reference' point is defined by the same coordinate Y of point 28, and taken back to the beginning of the landing of the service stairs.

In case there is no service stairs, on reference points 28 and 29, coordinate X shall be modified so as to make it coincide with the most external position of the cab joint area on its right side.

For each passenger boarding bridge there shall be two coordinate systems defied, one fixed coordinate system, originating at the centre of the entrance rotunda, and a mobile coordinate system with respect to the fixed coordinate system, originating at the centre of the cab joint area. In the mobile coordinate system, the x-axis coincides with the longitudinal axis of mobile tunnel 3, and, in the fixed coordinate system, the x-axis coincides with the longitudinal axis of fixed tunnel 31.

In order to calculate the reference points defined in the cab, the mobile coordinate system is taken into consideration, whose origin (0, 0) shall be the centre of the cab joint area, that is to say, point 25.
When there is a cab rotation movement, these reference points shall always move with respect to the origin of mobile coordinates axis system, point 25.

Therefore, the position of reference points 8, 9, 10 and 11, as well as the position of the reference points defined between 8 and 9 (12-17) and 10 and 11 (18-24), shall be defined, at all times, with respect to point 25, on the vector which joins this point to each of the aforementioned ones and the corresponding angle. These values shall always be constant, and shall only vary if the dimensions of the cab of the boarding bridge are modified.

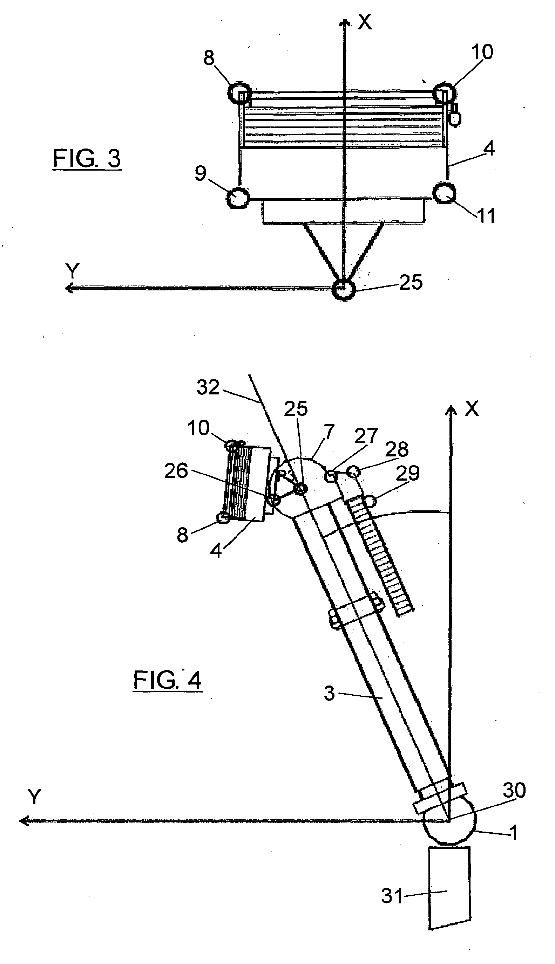

Figure 3 shows the position of the mobile coordinate system described. This mobile coordinate system shall move with respect to the fixed coordinate system, which originates at the centre of the entrance rotunda of the boarding bridge, according to the extension of the boarding bridge and the turn thereof.

It shall be understood that the coordinate systems mentioned are defined in order to describe the anti-collision system object of the present invention, but the anti-collision system object of the present patent could be used with any other coordinate systems.

Next, the fixed coordinate system of each set of passenger boarding bridge is to be described, Figure 4. This coordinate system refers to the centre 30 of the entrance rotunda (0, 0). Axis X shall be aligned with fixed tunnel 31 or neck of the entrance rotunda.

The position of the centre of this coordinates system is fixed, and is not affected neither by the extension nor by the rotation of the boarding bridge.

The central union of this fixed coordinate system, point 30 with point 25 describes an axis 32 which, according to the rotation movement of the boarding bridge, shall describe an "alpha" angle with respect to axis X.

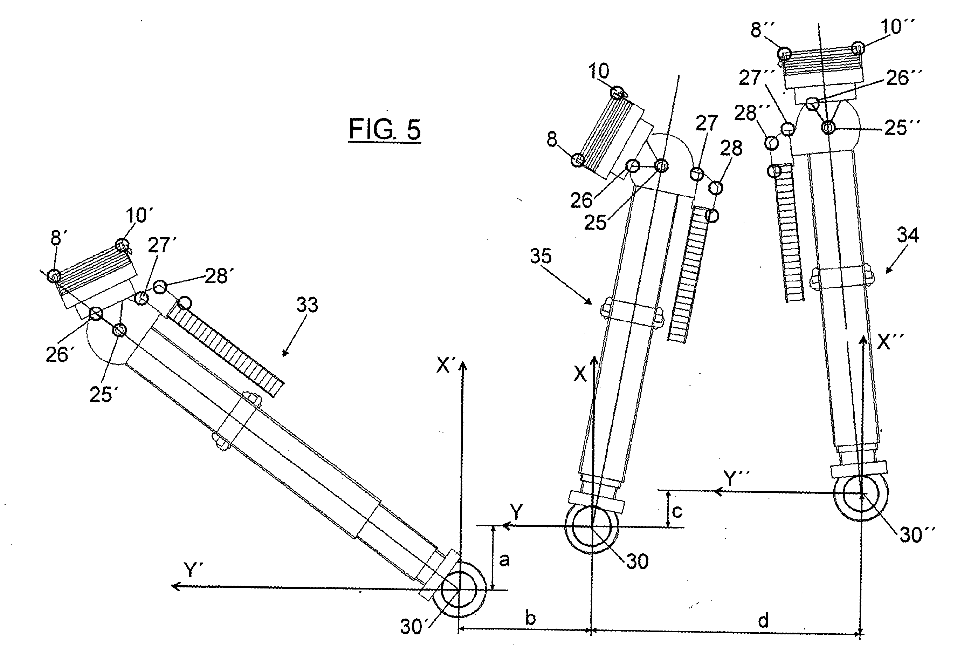

The mobile coordinate system, defined in cab for the calculation of the position of the different points, shall be affected in its position with respect to the fixed coordinate system of the boarding bridge, according to the extension and rotation movement of tunnel 3.
Once the reference points of each of the passenger boarding bridges are defined with respect to the fixed coordinate system of the boarding bridge itself, (X' - Y' system on the left passenger boarding bridge 33, X" - Y" system on the right boarding bridge 34 and X - Y system on the central boarding bridge 35, as it can be seen in Figure 5), it shall be necessary to refer the reference points of all the passenger boarding bridges with respect to one of the coordinate systems, designed as local and considered the origin of the whole system, and which corresponds to the fixed coordinates system of central passenger boarding bridge 35.

With the purpose of referring the reference points of left passenger boarding bridge 33 and right boarding bridge 34 to the coordinates system defined as local, it will be necessary to introduce in the programme the variables which result from the coordinates of the origin of the fixed coordinate systems of left boarding bridge 33 and right boarding bridge 34, and which, as can be seen in Figure 5, are "a" and "b" for the left boarding bridge and "c" and "d" for the right boarding bridge, as well as the angle between the axes of the boarding bridges.

It has been described how to refer the reference points of the passenger boarding bridges with respect to a coordinate system, defined as local, which corresponds to the fixed coordinate system of the central boarding bridge. This shall allow for the calculations of both the distances between all the reference points we would like to consider and the distances of each one of the defined points with the tunnels.

Each one of the passenger boarding bridges defines a straight line 32 between centre 30 of the entrance rotunda 1 (point 0, 0 of the fixed coordinate system of each passenger boarding bridge) and the centre of cab joint area 7 (point 25 of each one of the boarding bridges).

The position of these straight lines can be referred to the fixed coordinate system with the values introduced corresponding to the position of the centre of each one of the rotundas of left boarding bridge 33 and right boarding bridge 34, as well as the angle between passenger boarding bridges as it has been previously described.

Once the position of all the defined reference points is known, as well as the position of the axes of the boarding bridges, the control software will calculate the distances, first between each one of the reference points of each set of passenger boarding bridge and the adjacent boarding bridges, and then between each one of the reference points of each set of passenger boarding bridge with the axes of the adjacent boarding bridges.

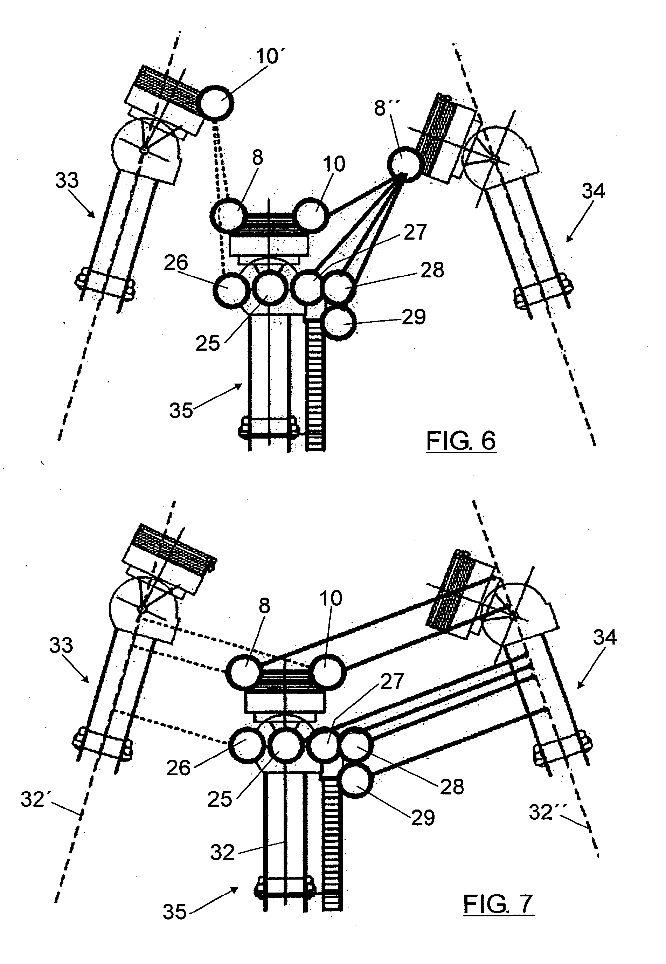

Figure 6 represents an example of the calculations of the reference points of a set of boarding bridge with respect to those of the adjacent boarding bridge.

Distance between reference point 10' of the left boarding bridge 33 with:
- Point 8 of the central boarding bridge 35
- Point 12 to 17 of the central boarding bridge 35
- Point 26 of the central boarding bridge 35

Distance between reference point 8" of the right boarding bridge 34 with:
- Point 10 of the central boarding bridge 35
- Point 18 to 24 of the central boarding bridge 35
- Point 27 of the central boarding bridge 35
- Point 28 of the central boarding bridge 35
- Point 29 of the central boarding bridge 35

Figure 7 represents the calculation of the distance between each one of the reference points of the central boarding bridge 35 with axes 32' and 32" of the left boarding bridge 33 and right boarding bridge 34.

Distance between axis 32' of the left boarding bridge with the following reference points:
- Point 8 of the central boarding bridge 35
- Point 12 to 17 of the central boarding bridge 35
- Point 10 of the central boarding bridge 35
- Point 25 of the central boarding bridge 35
- Point 26 of the central boarding bridge 35

Distance between axis 32" of the right boarding bridge with the following reference points:
- Point 8 of the central boarding bridge 35
- Point 10 of the central boarding bridge 35
- Point 18 to 24 of the central boarding bridge 35
- Point 25 of the central boarding bridge 35
- Point 27 of the central boarding bridge 35
- Point 28 of the central boarding bridge 35
- Point 29 of the central boarding bridge 35

The software calculates the distance of each one of the reference points with respect to those belonging to the adjacent boarding bridge. All these distances are inserted in a function block which shall provide the minimum value of all the distances between points. Besides, the software calculates the distance of each one of the reference points of each set of passenger boarding bridge to the axis of the adjacent boarding bridge. All these distances are inserted in another function block which shall provide the minimum value of all the distances. In this case, it shall be necessary to subtract to the resulting distance half the value of the tunnel width, as the calculation is done with respect to the axis of the tunnel, but the collision would occur with the tunnel.

Finally, these two resulting distances, that is to say, the minimum distance between reference points and the minimum between reference point and corrected straight line are inserted in another block which shall give as a result the minimum distance at each moment between boarding bridges.

Finally, this value is compared to the values introduced on the screen which can be configured by the user in order to activate a low speed movement and a stop.

If any of the distances calculated in real time reaches the value defined for activation of slow speed, the following sequence will occur:
- A message will be seen on the screen warning about the collision risk.
- An intermittent buzzer will be activated.
- The speed of the boarding bridge will be reduced.

If any of the distances calculated in real time reaches a limit value, defined for the stop of the boarding bridge in the collision area, an alarm is activated alerting about the danger of an imminent collision, with the following sequence:
- A message shall be seen on the screen warning about the stop of the boarding bridge.
- A continuous buzzer will be activated.
- The movement of the boarding bridge will stop in the direction of the activation of the stop signal.

## Claims

1. - Anti-collision system between aircraft passenger boarding bridges, especially between mobile passenger boarding bridges comprising a directional entrance rotunda connected to the terminal, a cab joint area with directional cab which is connected to a plane gate, and a telescopic passable tunnel which extends between the entrance rotunda and the cab joint area, **characterized in that it comprises:**
a) defining a fixed axis coordinate system for each set of passenger boarding bridge, which originates at the centre of the entrance rotunda and x-axis, and coincides with the axis of the fixed tunnel, and a mobile axis coordinate system with respect to the fixed axis coordinate system, which originates at the centre of the cab joint area and x-axis aligned to the axis of the telescopic tunnel and whose position is determined by its origin coordinates with respect to the fixed axis coordinate system;
b) defining for each set of passenger boarding bridge, and at all times, a series of references, by their coordinates with respect to the fixed or mobile axis coordinate system;
c) calculating by means of a control software, starting from the position of the previously defined references, the distances between references of each passenger boarding bridge and of the adjacent boarding bridges;
d) comparing the values of the calculated distances and choosing the lowest value; and
e) comparing the lowest value chosen to a reference value to activate, by means of the control software, a slow moving speed for the passenger boarding bridges or their stop, in case the lowest chosen value is lower than the reference value.

2. - System according to claim 1, **characterized in that** the references defined for each set of passenger boarding bridge consist of the passenger boarding bridges axes.

3. - System according to claim 1, **characterized in that** the references defined for each set of passenger boarding bridge consist of the reference points of the boarding bridges.

4. - System according to claim 1, **characterized in that** the references defined for each set of passenger boarding bridge consist of the reference points and passenger boarding bridges axes.

5. - System according to claims 1, 3 or 4, **characterized in that** the references defined for each set of passenger boarding bridge consist of a series of external reference points of the cab joint area and the cab, whose position is determined by their coordinates with respect to the mobile axis coordinate system.

6. - System according to claim 1, 3 or 4, **characterized in that** the references defined for each set of passenger boarding bridge also cover the origin of the mobile axis coordinate system of each set of passenger boarding bridge, whose position is determined at all times by its coordinates with respect to the fixed axis coordinate system of the adjacent boarding bridges.

7. - System according to claim 1 or 2, **characterized in that** the references defined for each set of passenger boarding bridge include the position of the axis of each set of passenger boarding bridge, in relation to the alpha angle formed between said axis and the axis X of the fixed axis coordinate system of said boarding bridge.

8. - System according to claim 1, **characterized in that** the references defined for each set of passenger boarding bridge include the angle formed between the axis of each set of passenger boarding bridge and the axis of the adjacent boarding bridges.

9. - System according to the preceding claims, **characterized in that** by means of the control software and from the position determined by reference points and axes considered at all times, we calculate the distance between reference points of each set of passenger boarding bridge and of the adjacent passenger boarding bridges, and between reference points of each set of passenger boarding bridge and axes of adjacent boarding bridges, the distances of which are inserted in a function block which provides the result for the minimum value of all distances between reference points and between reference points and axes of each set of passenger boarding bridge and adjacent passenger boarding bridges, inserting these minimum distances in a second function block which provides the result for the minimum distance at all times between boarding bridges, which is compared to reference values in order to, if that is the case, activate a slow speed movement of the boarding bridge, or its stop.

10. - System according to claim 9, **characterized in that** the reference values can be configured by the user.

11. - System according to claims 3, 4, 5 or 6, **characterized in that** sensors to measure the length and angle are installed in the reference points defined in the cab joint area and cab of each set of passenger boarding bridge, and these sensors are connected to remote modules or individual PLC installed in each set of passenger boarding bridge.

12. - System according to claim 11, **characterized in that** it comprises a central PLC which is connected to the remote modules or PLC installed in the boarding bridge and which has the control software in charge of the calculations of the aforementioned distances to activate the slow speed movement of a set of boarding bridge, or its stop.

13. - System according to claim 12, **characterized in that** before operations start in order to control the position of a boarding bridge, central PLC checks the status of the measure sensors installed in the passenger boarding bridges which intervene in the calculations to define the aforementioned reference points, and verifies communication between said central PLC and the remote modules or individual PLC installed in the boarding bridges, as well as calibration of said boarding bridges.

14. - System according to claim 1, **characterized in that** axis X of the fixed axis coordinate system is aligned to the axis of the fixed tunnel or neck of the entrance rotunda.

15. - System according to claim 1, **characterized in that** the axis of the mobile tunnel of each set of passenger boarding bridge goes through the origin of the fixed axis coordinate system and of the mobile axis coordinate system of said boarding bridge.

16. - System according to claim 12, **characterized in that** the control device is an independent logic programmable controller.

17. - System according to claims 12 and 16, **characterized in that** the control software of the anti-collision system runs in the logic programmable controller itself of the boarding bridge.

18. - System according to claim 9, **characterized in that,** when the distance between reference points, axes or reference points and axes reaches a certain limit value, an alarm is activated and this alerts of an imminent collision.
